# EUROPÄISCHE PATENTSCHRIFT

(11) **EP 2 007 601 B1**
(45) Veröffentlichungstag und Bekanntmachung des Hinweises auf die Patenterteilung: **31.07.2013**
(21) Anmeldenummer: 07723398.9
(22) Anmeldetag: 20.03.2007
(51) Int. Cl.: G01K 1/20, B60H 1/00

(54) **SENSORANORDNUNG FÜR DIE KLIMATISIERUNG EINES KRAFTFAHRZEUGES**
SENSOR ARRANGEMENT FOR THE CLIMATE CONTROL OF A MOTOR VEHICLE
DISPOSITIF DE CAPTEUR POUR LA CLIMATISATION D'UN VEHICULE AUTOMOBILE

(30) Priorität: 07.04.2006 DE 102006016821; 28.02.2007 DE 102007009672
(43) Veröffentlichungstag der Anmeldung: 31.12.2008
(73) Patentinhaber: Preh GmbH, 97616 Bad Neustadt a. d. Saale (DE)
(72) Erfinder: REGENSBURGER, Johann, 91795 Dollnstein (DE); BAUER, Georg, 97708 Bad Bocklet (DE); KRAMLICH, Andreas, 97424 Schweinfurt (DE); REISER, Michael, 96450 Coburg (DE); KÜCHLER, Wolfgang, 97645 Ostheim (DE)
(74) Vertreter: Bauer, Wulf
(86) Internationale Anmeldenummer: PCT/EP2007/002431
(87) Internationale Veröffentlichungsnummer: WO 2007/115652

(56) Entgegenhaltungen:
- EP-A1- 1 415 829
- EP-A2- 1 440 828
- DE-C1- 19 728 803

## Beschreibung

Die Erfindung betrifft eine Sensoranordnung zur Ermittlung einer Innenraumtemperatur in einem Kraftfahrzeug, die in ein Klimabedienteil mit einer Blende einsetzbar ist, bestehend aus einem geschlossenen Gehäuse mit zumindest einer Vorderwand und einer Rückwand wobei die Vorderwand aus einem einen guten Wärmetransport gewährleistenden Werkstoff gefertigt und das Gehäuse mit einem wärmeisolierenden Mittel gefüllt ist, einem ersten an einer Rückseite der Vorderwand befestigten Temperatursensor und einem zweiten Temperatursensor, der zumindest in Bezug auf eine Auswertung der Innenraumtemperatur mit dem ersten Temperatursensor zusammenwirkt.

Um eine voreinstellbare Temperatur in einem Innenraum eines Kraftfahrzeuges einstellen und auf einer Temperatur halten zu können, werden geregelte Klimaanlagen eingesetzt. Zur Erfassung des Ist-Wertes der Innenraumtemperatur werden hierbei verschiedenste Sensoren eingesetzt. Vielfach sind die Sensoren in die Klimabediengeräte der Kraftfahrzeuge, zur Bildung einer in sich geschlossenen Einheit, integriert. Zur Erfassung des tatsächlichen Ist-Wertes müssen hierzu unterschiedliche Einflüsse auf eine Sensoranordnung zur Erfassung der Ist-Temperatur berücksichtigt werden. So kann insbesondere eine unmittelbare Sonneneinstrahlung auf die Sensoranordnung den Messwert verfälschen, was wiederum zu einer ungenügenden Regulierung der Innenraumtemperatur führt. Neben der Sonneneinstrahlung ist die Luftzirkulation, die Temperatur peripherer Geräte wie auch die Körpertemperatur des Bedieners zu berücksichtigen und aus dem Messwert zur Erfassung der Innenraumtemperatur zu eliminieren.

Eine Sensoranordnung zur Erfassung der Ist-Raum-Temperatur ist in der EP 1 415 829 B1 offenbart. Auf den Offenbarungsgehalt der Druckschrift wird hiermit ausdrücklich und in vollem Umfang Bezug genommen. Die EP 1 415 829 B1 beschreibt eine Sensoranordnung zur Ermittlung der Innenraumtemperatur, wobei die Sensoranordnung an einer Aussenseite eines Klimabedienteils einer Klimaanlage angebracht ist. Die Sensoranordnung besitzt einen Temperatursensor, der auf einer Rückseite einer Vorderwand der Sensoranordnung mit gutem thermischen Kontakt zur Vorderwand befestigt ist. Das Sensorgehäuse ist rückseitig durch ein wannenförmiges Kunststoffgehäuse zum Innenraum des Bedienteils geschlossen.

Durch die Anordnung eines Temperatursensors auf die Innenseite der Vorderwand ist einerseits eine thermische Kopplung gegeben und anderseits durch die gute thermische Leitfähigkeit der Vorderwand eine äusserst präzise Ermittlung einer Temperatur vor der Vorderwand, was wiederum einer Temperatur des Innenraums des Kraftfahrzeuges entspricht, gegeben.

Die Aufgabe der Erfindung ist es eine Sensoranordnung bereitzustellen, die eine Miniaturisierung des Sensors ermöglicht und die gleichzeitig eine genauere und schnellere Erfassung der Messwerte ohne Verwendung einer Sensorlüftereinheit, das heisst einer aktiven Sensorbelüftung, mit sich bringt. Darüber hinaus sollen Störeinflüsse durch den Sensor beeinflussende Wärmequellen eliminiert werden.

Die Aufgabe der Erfindung durch eine Sensoranordnung mit den Merkmalen des Anspruch 1 gelöst. Der mindestens zweite Temperatursensor ist in der Sensoranordnung auf einer der Rückseite der Vorderwand zugewandten Innenseite der Rückwand befestigt. Durch die Befestigung eines mindestens zweiten Temperatursensors im Inneren des Gehäuses der Sensoranordnung können Wärmequellen, die rückseitig auf die Sensoranordnung strahlen, temperaturmässig erfasst und in einer nachgeschalteten Auswerteelektronik ausgewertet und zur genaueren Erfassung der Innenraumtemperatur herangezogen werden. Im Gegensatz zum Stand der Technik, wird hierbei die unmittelbare Erwärmung des Gehäuses der Sensoranordnung erfasst, woraus die reale Wärmestrahlung auf den ersten Temperatursensor ermittelbar ist. Durch die Integration in das Gehäuse und die Erfassung der rückseitigen Strahlung der Rückwand des Gehäuses ist einerseits ein schnellerer Abgleich des ersten Temperatursensors möglich und die Sensoranordnung ist in ihren Abmassen sehr viel geringer dimensionierbar.

In der erfindungsgemäßen Sensoranordnung sind mit dem zweiten Temperatursensor periphere Geräte, wobei hierzu auch eine hinter dem Sensor angeordnete zum Klimabedienteil gehörige Leiterplatte gemeint ist, erfassbar. Bei Störungen, wie beispielsweise Sonnenschein, einem Finger auf der Sensoranordnung, kann durch einen Vergleich mit einer Energiebilanz und eine entsprechende Logik der Messwert auf Plausibilität überprüft werden und gegebenenfalls ersatzweise die theoretisch berechnete Temperatur als Grundlage für den Temperatur-Ist-Wert für die Klimaregelung herangezogen werden. Hierbei berechnet das Energiebilanzmodell die Innenraumtemperatur aus allen nötigen Sensor- und Betriebswerten, die im Steuergerät und im Bordnetz des Kraftfahrzeugs zur Verfügung stehen. Derartige Betriebswerte sind beispielsweise die Aussentemperatur, die Ausblastemperatur aus den Lüftungsöffnungen, die Luftverteilung, die Luftmenge, ein Sonnensensor, et cetera.

Nachfolgend wird die Erfindung anhand von Prinzipskizzen und Diagrammen näher erläutert.

Es zeigt

Fig. 1 den Schnitt durch ein kiimabediengerät oder eine Instrumententafel in einem Kraftfahrzeug, durch die erfindungsgemäß aufgebaute Sensoranordnung,

Fig. 2 eine Detailansicht aus Fig. 2 gemäß II,

Fig. 3 eine Draufsicht auf die erfindungsgemäße Sensoranordnurig gemäss dem Pfeil III und

Fig. 4 ein Diagramm sowie eine dazugehörige Sensoranordnung in einem Funktionsbeispiel.

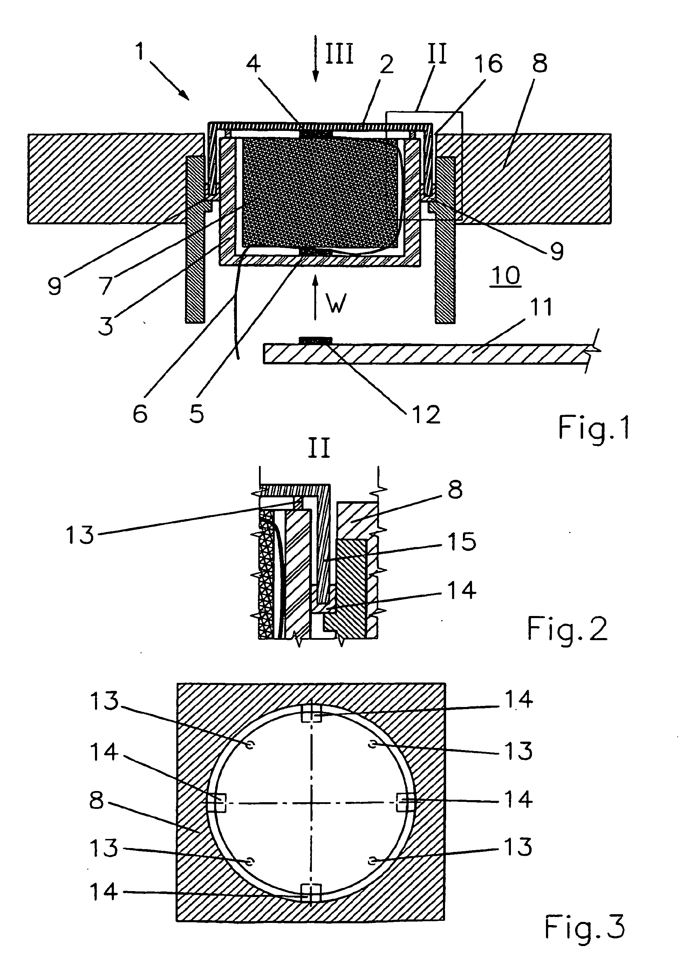

Die Fig. 1 zeigt eine erfindungsgemäße Sensoranordnung 1 als Oberflächensensor 1, eine Vorderwand 2, die Teil des Gehäuses des Oberflächensensors 1 ist, eine vornehmlich aus Kunststoff gefertigte Rückwand 3 als Gehäusehinterteil, einen ersten Temperatursensor 4 sowie eine zweiten Temperatursensor 5, eine flexible Leitung 6, wobei die flexible Leitung 6 mit den beiden Temperatursensoren 4, 5 verbunden ist und ein im Gehäuse 2, 3 befindliches wärmeisolierendes Mittel 7, das einerseits das Gehäuse 2, 3 ausfüllt und andererseits zwischen den Temperatursensoren 4, 5 isolierend wirkt. Der Oberflächensensor 1 ist bündig oder nahezu bündig in eine Blende 8 eines Bediengerätes einer Klimaanlage oder direkt in ein Armaturenbrett 8 integriert; Die Sensoranordnung 1 ist mittels Führungsrippen 9 in der Blende 8 gehalten. Hinter dem Oberflächensensor 1 im Inneren 10 des Klimabediengerätes ist eine Leiterplatte 11 dargestellt. Auf der Leiterplatte 11 ist in diesem Ausführungsbeispiel ein weiterer Temperatursensor 12 befestigt.

Der Temperatursensor 4, der vornehmlich ein NTC-Widerstand ist, ist unmittelbar an der Rückseite der Vorderwand 2 befestigt. Ein weiterer NTC-Widerstand 5 als Temperatursensor 5 ist an einer, der Rückseite der Vorderwand 2 zugewandten Oberfläche der Rückwand 3 des Gehäuses des Oberflächensensors 1 befestigt. Zwischen den Temperatursensoren 4 und 5 ist ein Dämmstoff 7 in das Gehäuse eingebaut. Der Dämmstoff 7 verhindert, dass eine Wärmestrahlung von der Rückseite des Gehäuses zum ersten Temperatursensor 4 gelangt und verbessert somit die Funktionsfähigkeit der Sensoranordnung 1.

Die Temperaturstrahlung rührt von peripheren Geräten im Kraftfahrzeug her und wird vornehmlich von einer hinter dem Oberflächensensor 1 angeordneten Leiterplatte 11 ausgestrahlt, wobei die Wärmestrahlung W in Richtung des Pfeils W auf den Oberflächensensor 1 gelangt. Derartige Leiterplatten 11 werden üblicherweise bis zu 40 deg. C warm und erwärmen somit das Gehäusehinterteil 3 der Sensoranordnung 1, wodurch der Messwert des ersten Temperatursensors 4 beeinträchtigbar ist. Die Beeinträchtigung wird einerseits durch den Einsatz eines Dämmstoffes 7 im Inneren des Oberflächensensors verhindert und andererseits durch die Erfassung der Temperatur des zweiten Temperatursensors 5 elektronisch erfasst und bei der Auswertung berücksichtigt. Mögliche Dämmstoffe 7 sind hierbei PU-Schaum, Silikon-Schaum, Glashohlkugeln oder Keramikhohlkugeln.

Ein weiterer erfindungsgemäßer Vorteil ergibt sich dann, wenn ein weiterer Temperatursensor 12 in unmittelbarer Nähe der Sensoranordnung 1 befestigt ist. Es ist somit die Möglichkeit gegeben, die Temperatur der Leiterplatte 11 oder eines anderen peripheren Gerätes in der Nähe der Sensoranordnung 1 unmittelbar zu erfassen und bei der Auswertung und Ermittlung der Innenraumtemperatur vor der Blende 8 zu berücksichtigen. Hierbei sei angemerkt, dass es erfindungsgemäß natürlich auch vorstellbar ist, den zweiten oder einen weiteren zusätzlichen Temperatursensor im Gehäuse 2, 3 auf einer Innenseite des Gehäusehinterteils 3, derart zu befestigen, dass weitere den Sensor 1 umgebende Wärmequellen erfassbar sind.

Die Vorderwand 2, wird vornehmlich aus einem Werkstoff gefertigt, der eine gute thermische Leitfähigkeit besitzt. Ein Beispiel hierfür ist beispielsweise Metall, und insbesondere Aluminium und Kupfer. Der erste Temperatursensor 4 ist auf der Rückseite der Vorderwand 2 befestigt, wie auch im Stand der Technik beschrieben, auf den hier ausdrücklich Bezug genommen wird. Um sämtliche Störeinflüsse auf die Vorderwand 2 auszuschliessen oder zu mindest zu minimieren, wird die Vorderwand 2 auf Auflagedomen 13 mit Abstand zur Rückwand 3 gehalten. Deutlich zu erkennen ist dies in der Fig. 2. Die Fig. 2 zeigt hierbei eine Detailansicht gemäss II aus der Fig. 1. Die Vorderwand 2 wird einerseits über regelmässig an der Rückwand 3 angebrachte Aufnahmedomen 13 in einem Abstand von ca. 0,15 mm von der Rückwand 3 gehalten. Um auch die Einflüsse des Armaturenbrettes oder der Blende 8 der Klimabediengerätes zu eliminieren oder zumindest zu minimieren wird die Vorderwand 2, die sich in diesem Ausführungsbeispiel einerseits über die Seitenwände der Rückwand 3 hinaus erstreckt und die Seitenwände der Rückwand 3 vollumfänglich umschliessen, in Führungsrippen 14, die an der Rückwand 3 befestigt oder einstückig aus dieser geformt sind, gehalten. Die die Rückwand 3 umschliessenden Bereiche 15 der Vorderwand 2 werden durch die Führungsrippen 14 etwa 0,1 mm von der Blende 8 entfernt gehalten. Alternativ besteht auch die Möglichkeit, auf die Auflagedome 13 gänzlich zu verzichten und die Vorderwand 2 ausschliesslich an den Führungsrippen 14 zu befestigen, was eine verbesserte thermische Entkopplung bewirkt.

Erfindungsgemäß ist die Sensoranordnung 1 zylindrisch ausgebildet, wie in der Fig. 3 dargestellt. Die Fig. 3 zeigt eine Ansicht auf einen Obertlächensensor 1 aus Sicht des Pfeils III der Fig. 1. Deutlich zu erkennen ist die Positionierung der Vorderwand 2 durch die Aufnahmedome 13 und die Führungsrippen 14 in Bezug auf den Abstand zur Blende 8.

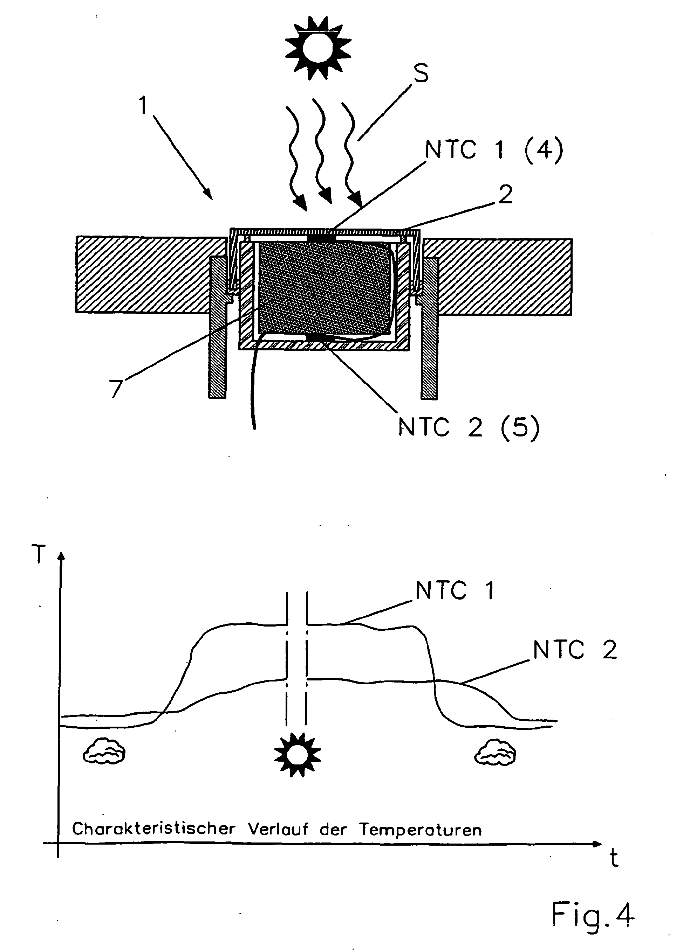

In der Fig. 4 ist die prinzipielle Funktion einer erfindungsgemäßen Sensoranordnung 1 in einem Diagramm und einem Prinzipbild dargestellt. Wird beispielsweise, wie im oberen Teil der Fig. 4 dargestellt, die Sensoranordnung 1 unmittelbar durch eine Sonneneinstrahlung S beaufschlagt, so ändert sich die Temperatur des Widerstandes 4 schlagartig, was im Diagramm als Anstieg der Kurve NTC 1 dargestellt ist. Diesem starken unmittelbaren Einfluss der Sonneneinstrahlung S folgt der im hinteren Teil, das heisst hinter dem Dämmstoff 7 angeordnete zweite Temperatursensor 5, NTC 2 nur mittelbar, wodurch eine Auswertung dahingehend ermöglicht ist, das es sich um eine temporäre unmittelbare Sonneneinstrahlung handelt. Bedingt durch die sehr gute Wärmeleitfähigkeit der Vorderwand 2 ändert sich die Temperatur im Temperatursensor 4 ebenfalls wieder schlagartig nachdem die Sonneneinstrahlung S aufhört, was im Diagramm mit einem Abfall der Kurve NTC 1 wiedergegeben ist. Hierdurch ist es erfindungsgemäß möglich, temporäre Einflüsse auf die Sensoranordnung 1 zu berücksichtigen und in einer nachgeschalteten Auswerteelektronik als Sonneneinstrahlung zu erfassen.

Darüber hinaus ist es erfindungsgemäß natürlich möglich mehrere Temperatursensoren 5, 11 zum einen im Gehäuse der Sensoranordnung 1 anzuordnen, wie auch in der Peripherie des Sensors 1 zu befestigen. Zur Anpassung an das Klimabediengerät oder das Interieur des Fahrzeuges, ist es erfindungsgemäß vorstellbar, die Vorderwand zumindest auf der dem Fahrzeugführer gewandten Seite zu lackieren oder somit optisch anzupassen.

## Patentansprüche

1. Sensoranordnung (1) zur Ermittlung einer Innenraumtemperatur in einem Kraftfahrzeug, die in Klimabedienteil (8) mit einer Blende einsetzbar ist, bestehend aus einem geschlossenen Gehäuse (2, 3) mit zumindest einer Vorderwand (2) und einer Rückwand (3) wobei die Vorderwand (2) aus einem einen guten Wärmetransport gewährleistenden Werkstoff gefertigt und das Gehäuse (2, 3) mit einem wärmeisolierenden Mittel (7) gefüllt ist, einem ersten an einer Rückseite der Vorderwand (2) befestigten Temperatursensor (4) und einem zweiten Temperatursensor (5), der zumindest in Bezug auf eine Auswertung der Innenraumtemperatur mit dem ersten Temperatursensor (4) zusammenwirkt,
**dadurch gekennzeichnet, dass**
- der mindestens zweite Temperatursensor (5) auf einer der Rückseite der Vorderwand (2) zugewandten Innenseite der Rückwand (3) befestigt ist,
- die Sensoranordnung (1) in einer Öffnung (16) einer Blende des Klimabedientells (8) gehalten werden kann,
- die Rückwand (3) ein einseitig geschlossener Zylinder und die Vorderwand (2) mittels Auflagedomen (13) in einem gleichmäßigen Abstand vom offenen Ende des Zylinders gehalten ist,
- die Rückwand (3) umschließende Bereiche (15) der Vorderwand (2) beabstandet zu der Blende an Führungsrippen (14), die an der Rückwand (3) befestigt oder einstückig aus dieser geformt sind, angeordnet sind.

2. Sensoranordnung nach Anspruch 1, **dadurch gekennzeichnet, dass** mindestens ein weiterer Temperatursensor (12) im Bereich des Gehäuses (2, 3) im Klimabedienteil (8) befestigt ist, so dass eine Wärmestrahlung (W) auf das Gehäuse (2, 3) erfassbar ist.

3. Sensoranordnung nach einem der Ansprüche 1 oder 2, **dadurch gekennzeichnet, dass** eine Leiterplatte (11) im Inneren des Kilmabedienteils (8) und zumindest bereichsweise hinter der Sensoranordnung (1) befestigt ist und das der weitere Temperatursensor (12) auf der Leiterplatte (11) aufgenommen ist.

4. Sensoranordnung nach einem der Ansprüche 1 bis 3, **dadurch gekennzeichnet, dass** die Rückwand in regelmäßigem Abstand voneinander beabstandete Auflagedome (13) besitzt und die Vorderwand (2) auf den Auflagedomen (13) aufliegt und umfänglich über die Rückwand (3) hinausragt oder hinausragt und zumindest eine Seitenwand der Rückwand (3) umschließt.

5. Sensoranordnung nach einem der Ansprüche 1 bis 4, **dadurch gekennzeichnet, dass** die Vorderwand (2) mittels der Auflagedome (13) in einem gleichmäßigen Abstand von etwa 0,15 mm vom offenen Ende des Zylinders gehalten und über am äusseren Umfang des Zylinders (3) befindliche Führungsrippen (9) zentriert und mit Abstand von der Öffnung gehalten ist.

6. Sensoranordnung nach einem der Ansprüche 1 bis 5, **dadurch gekennzeichnet, dass** die Vorderwand (2) aus einem metallischen Werkstoff, insbesondere Aluminium, gebildet ist.

7. Sensoranordnung nach einem der Ansprüche 1 bis 6, **dadurch gekennzeichnet, dass** die Vorderwand (2) zumindest in Richtung des Innenraums des Kraftfahrzeuges lackiert ist.

## Claims

1. A sensor assembly (1) for determining an inside temperature in a motor vehicle, which is insertable into a climate control component (8) with a panel, consisting of a closed housing (2, 3) with at least one front wall (2) and one rear wall (3), wherein the front wall (2) is made from a material that ensures a good thermal transfer and the housing (2, 3) is filled with a thermally insulating substance (7), a first temperature sensor (4) attached to a rear of the front wall (2) and a second temperature sensor (5) that cooperates with the first temperature sensor (4) at least with regard to an evaluation of the inside temperature,
**characterised in that**
- the at least second temperature sensor (5) is attached to an inner face of the rear wall (3) that faces the rear of the front wall (2),
- the sensor assembly (1) can be retained in an opening (16) of a panel of the climate control component (8),
- the rear wall (3) is a unilaterally sealed cylinder and the front wall (2) is kept at a uniform distance from the open end of the cylinder by means of support domes (13),
- regions (15) of the front wall (2) enclosing the rear wall (3) are disposed at a distance from the panel on guide ribs (14) that are attached to the rear wall (3) or integrally formed from it.

2. The sensor assembly according to claim 1, **characterised in that** at least one further temperature sensor (12) is attached in the region of the housing (2, 3) in the climate control component (8), so that a heat radiation (W) on the housing (2, 3) is detectable.

3. The sensor assembly according to any one of the claims 1 or 2, **characterised in that** a circuit board (11) is fastened in the interior of the climate control component (8) and at least in some regions behind the sensor assembly (1), and that the further temperature sensor (12) is accommodated on the circuit board (11).

4. The sensor assembly according to any one of the claims 1, to 3, **characterised in that** the rear wall comprises support domes (13) that are spaced apart from one another at regular distances and that the front wall (2) rests on the support domes (13) and circumferentially protrudes over the rear wall (3) or protrudes and encloses at least one side wall of the rear wall (3).

5. The sensor assembly according to any one of the claims 1 to 4, **characterised in that** the front wall (2) is retained by means of the support domes (13) at a uniform distance of about 0.15 mm from the open end of the cylinder and is centred and held at a distance from the opening by means of guide ribs (9) located at the outer circumference of the cylinder (3).

6. The sensor assembly according to any one of the claims 1 to 5, **characterised in that** the front wall (2) is made from a metallic material, in particular aluminium.

7. The sensor assembly according to any one of the claims 1 to 6, **characterised in that** the front wall (2) is painted at least in the direction of the vehicle interior.

## Revendications

1. Ensemble de capteurs (1) destiné à déterminer une température d'intérieur dans un véhicule automobile et apte à être inséré dans un élément de commande de conditionnement d'air (8) ayant une cache, constitué par un boîtier fermé (2, 3) ayant au moins une paroi avant (2) et une paroi arrière (3), ladite paroi avant (2) étant réalisée dans un matériau assurant un bon transport de chaleur et ledit boîtier (2, 3) étant rempli d'un produit d'isolation thermique (7), par un premier capteur de température (4) qui est fixé sur une face arrière de la paroi avant (2) ainsi que par un deuxième capteur de température (5) qui, au moins en ce qui concerne une évaluation de la température d'intérieur, agit de concert avec ledit premier capteur de température (4),
**caractérisé par le fait que**
- ledit au moins deuxième capteur de température (5) est fixé sur une face intérieure de la paroi arrière (3), qui montre vers la face arrière de la paroi avant (2),
- ledit ensemble de capteurs (1) peut être retenu dans une ouverture (16) d'une cache dudit élément de commande de conditionnement d'air (8),
- ladite paroi arrière (3) est un cylindre fermé sur un côté et ladite paroi avant (2) est maintenue au moyen de dômes d'appui (13) à une distance régulière de l'extrémité ouverte du cylindre,
- des zones (15) de la paroi avant (2), qui entourent la paroi arrière (3) sont disposées à distance de ladite cache sur des nervures de guidage (14) qui sont fixées sur la paroi arrière (3) ou sont moulées d'un seul tenant de celle-ci.

2. Ensemble de capteurs selon la revendication 1, **caractérisé par le fait qu'**au moins un autre capteur de température (12) est fixé au niveau du boîtier (2, 3) dans ledit élément de commande de conditionnement d'air (8) de manière à ce qu'un rayonnement thermique (W) rencontrant ledit boîtier (2, 3) puisse être détecté.

3. Ensemble de capteurs selon l'une quelconque des revendications 1 ou 2, **caractérisé par le fait qu'**une carte de circuits imprimés (11) est fixée à l'intérieur dudit élément de commande de conditionnement d'air (8) et, au moins par zones, derrière ledit ensemble de capteurs (1) et que ledit autre capteur de température (12) est reçu sur ladite carte de circuits imprimés (11).

4. Ensemble de capteurs selon l'une quelconque des revendications 1 à 3, **caractérisé par le fait que** ladite paroi arrière présente des dômes d'appui (13) qui sont espacés les uns des autres à distance régulière, et que ladite paroi avant (2) s'appuie sur lesdits dômes d'appui (13) et dépasse circonférentiellement la paroi arrière (3) ou fait saillie et entoure au moins une paroi latérale de la paroi arrière (3).

5. Ensemble de capteurs selon l'une quelconque des revendications 1 à 4, **caractérisé par le fait que** la paroi avant (2) est maintenue au moyen des dômes d'appui (13) à une distance régulière d'environ 0,15 mm de ladite extrémité ouverte du cylindre et est centrée et maintenue à distance de l'ouverture par l'intermédiaire de nervures de guidage (9) situées sur la circonférence extérieure du cylindre (3).

6. Ensemble de capteurs selon l'une quelconque des revendications 1 à 5, **caractérisé par le fait que** la paroi avant (2) est réalisée dans un matériau métallique, en particulier en aluminium.

7. Ensemble de capteurs selon l'une quelconque des revendications 1 à 6, **caractérisé par le fait que** la paroi avant (2) est laquée au moins en direction de l'intérieur du véhicule automobile.
